# FASCICULE DE BREVET EUROPEEN

(11) **EP 1 225 761 B1**
(45) Date de publication et mention de la délivrance du brevet: **30.03.2005**
(21) Numéro de dépôt: 02100019.5
(22) Date de dépôt: 16.01.2002
(51) Int. Cl.: H04N 5/44, H04N 5/445

(54) **Procédé de commande d'un appareil comportant plusieurs sources vidéo**
Verfahren zum Steuern eines Gerätes mit mehreren Videoquellen
Method for controlling a device comprising multiple video sources

(30) Priorité: 16.01.2001 FR 0100567
(43) Date de publication de la demande: 24.07.2002
(73) Titulaire: SAGEM SA, 75015 Paris (FR)
(72) Inventeur: CUOQ, Jean Noel, 92150, SURESNES (FR)
(74) Mandataire: Schmit, Christian Norbert Marie

(56) Documents cités:
- EP-A- 0 837 599
- EP-A- 0 996 307
- EP-A- 1 028 589
- EP-A- 1 089 560
- WO-A-00/52927
- WO-A-98/37695
- US-A- 5 701 383
- US-A- 5 801 747
- US-A- 5 852 474
- US-A- 6 112 007
- US-B1- 6 204 886

## Description

L'invention a pour objet un procédé de commande d'un appareil comportant plusieurs sources vidéo. Le domaine de l'invention est celui de la télévision. Le domaine de l'invention est en particulier celui des récepteurs de signaux de télévision comportant plusieurs sources vidéo, par exemple plusieurs tuners. Le but de l'invention est de permettre à un utilisateur d'un tel appareil de pouvoir connaître rapidement l'état de l'appareil, et de toutes les sources vidéo qu'il comporte. Un autre but de l'invention est de permettre à un utilisateur d'un tel appareil de commander cet appareil sans ambiguïté possible, et en minimisant le nombre d'erreurs de manipulation possibles.

Dans l'état de la technique, on connaît des appareils, par exemple des récepteurs décodeurs de télévision, qui comportent deux tuners. Chacun de ces deux tuners peut alors être paramétré pour être accordé sur des services, c'est-à-dire en fait une chaîne, différents. Il est alors possible, grâce à un tel appareil, de visualiser la chaîne sur laquelle est accordé le premier tuner, alors qu'on enregistre la chaîne sur laquelle est accordé le deuxième tuner. Avec un tel appareil, l'utilisateur peut choisir quel tuner produit la séquence d'images qu'il visualise sur un dispositif de visualisation connecté à cet appareil. Il peut s'agir soit du tuner 1 soit du tuner 2.

Lorsqu'il souhaite effectuer un enregistrement, l'utilisateur provoque, grâce à une télécommande, l'affichage d'un menu d'enregistrement. Dans ce menu, il peut sélectionner à partir de quel tuner sera effectué l'enregistrement, sur quelle chaîne doit être accordé ce tuner, une heure de début et une heure de fin d'enregistrement. Lorsqu'il valide sa programmation d'enregistrement, l'utilisateur revient alors à un mode de visualisation courant d'une des chaînes sur lesquelles est accordé l'un des tuners.

Lorsque l'utilisateur visualise la séquence d'images issue de l'un des tuners, il peut provoquer l'affichage d'informations sur cette séquence d'images. Ces informations comportent notamment une indication sur la chaîne qu'il est en train de regarder, le titre de l'événement qu'il visualise ainsi que le temps écoulé ou le temps restant avant la fin de l'événement. Un événement désigne une émission de télévision, qu'il s'agisse d'un film, d'un feuilleton, du journal, d'une émission de variété ou de tout autre type de programme diffusé via des systèmes de télévision.

Si un deuxième utilisateur survient et décide d'utiliser l'appareil, pendant la plage d'enregistrement paramétrée par le premier utilisateur, ce deuxième utilisateur peut décider de sélectionner le tuner dont sera issue la séquence d'images qui doit être enregistrée. Dans ce cas, si le deuxième utilisateur ne regarde pas la chaîne correspondant à la programmation faite par le premier utilisateur, l'enregistrement ne sera pas correctement effectué puisque c'est la séquence d'images issue de la chaîne sélectionnée par le deuxième utilisateur qui sera enregistrée. De tels incidents peuvent se produire car dans les informations affichées, il n'y a aucune indication identifiant que la séquence vidéo produite par le deuxième tuner est en cours d'enregistrement.

Dans l'état de la technique, on connaît aussi des récepteurs décodeurs de télévision qui permettent de visualiser des séquences d'images en temps différé. Un tel appareil comporte pour chaque tuner par exemple une mémoire qui enregistre les dernières minutes de la séquence vidéo qui a été produite par le tuner. L'utilisateur d'un tel appareil peut alors décider de visualiser ces dernières minutes alors que l'appareil continue à enregistrer dans cette mémoire les séquences d'images produites par le tuner. Cela est pratique, notamment lorsque l'utilisateur doit s'absenter pour une brève période et ne peut donc suivre le déroulement d'une action sur l'écran. Comme les dernières minutes de l'émission ont été enregistrées, l'utilisateur lorsqu'il revient devant l'écran peut alors revenir en arrière dans la séquence vidéo produite par le tuner et poursuivre la visualisation à partir de l'instant où il s'est absenté.

Dans les appareils actuels, lorsqu'un utilisateur effectue une visualisation différée et qu'il demande l'affichage d'informations sur l'émission qu'il est en train de regarder, l'appareil affiche la chaîne, le titre de l'émission ainsi que la durée qui s'est écoulée depuis le début de l'émission. Par exemple, si l'émission a commencé il y a une heure, l'appareil indiquera que l'émission a commencé depuis une heure. Cependant, il est tout à fait possible que l'utilisateur soit en visualisation différée de plusieurs dizaines de minutes, par exemple une demi-heure. Si l'émission dure une heure trente, l'utilisateur va croire qu'il lui reste une demi-heure d'émission à visualiser avant la fin de l'émission. Il va donc se dire qu'il a le temps de visualiser la fin de l'émission avant d'aller prendre son train qui part quarante-cinq minutes plus tard. Cependant, comme il est en visualisation différée d'une demi-heure, il lui reste en fait une heure d'émission à visualiser. Ainsi, quand l'émission se termine, il se sera écoulé une heure et il aura manqué son train.

Ce problème se combine avec le premier. En effet, on peut avoir à faire à un appareil comportant plusieurs sources vidéo, chacune de ces sources vidéo pouvant être parcourue en temps différé. Rapidement le nombre de combinaisons possibles pour les sources vidéo, et les états dans lequel elles se trouvent, augmente. La seule information qui est disponible à un instant donné pour un utilisateur est l'état en temps réel de la source vidéo qui est sélectionnée pour une visualisation sur l'écran. D'autre part, cette information ne lui permet de plus pas de savoir quelles sont les actions qu'il peut entreprendre sur cette source vidéo sans risquer de perturber un enregistrement par exemple.

Dans l'invention, on résout ces problèmes d'une part en affichant une information de temps relative à un temps différé imposé par l'utilisateur. Dans une variante préférée, cette information est affichée sous la forme d'un décalage par rapport au temps réel. Par exemple, si l'utilisateur visualise une émission en temps différé de dix minutes, il y a une information de la forme "0h10min0s" qui est affichée. Si l'utilisateur visualise une émission en temps réel, ceci lui est indiqué, par exemple, par le mot "LIVE" (ou "DIRECT"). Par ailleurs l'heure courante peut aussi être affichée. Cela limite, pour l'utilisateur les risques d'être surpris par une visualisation d'une émission en temps différé.

D'autre part dans l'invention, on mesure l'état de toutes les sources vidéo présentes dans l'appareil. L'état de ces sources vidéo est alors présenté à l'utilisateur sans que celui-ci ait besoin de sélectionner cette source vidéo. Il peut donc visualiser en un seul coup d'oeil l'état de toutes les sources vidéo de l'appareil. De plus, dans une variante de l'invention, pour chaque source vidéo, on détermine et on présente les actions qu'il est possible d'effectuer sur chaque source vidéo. Toujours dans une variante de l'invention, on présente la source vidéo sélectionnée de manière à ce qu'elle soit mise en avant par rapport aux informations des autres sources vidéo.

L'invention a donc pour objet un procédé de commande de premiers moyens, de production de signal vidéo, comportant plusieurs sources vidéo produisant des séquences d'images simultanément, cette production de séquences d'images s'effectue en temps réel à un rythme imposé par au moins des deuxièmes moyens d'émission produisant des signaux à partir desquels des sources vidéo produisent des séquences d'images, procédé dans lequel :
- on sélectionne une source vidéo pour que la séquence d'images qu'elle produit soient affichées sur un dispositif de visualisation connecté aux premiers moyens,
- on parcourt temporellement la séquence d'images produite par la source vidéo sélectionnée,
caractérisé en ce que :
- on mesure un état dit courant de la source vidéo sélectionnée, chacune des sources vidéo comportant une mémoire tournante, des valeurs de pointeurs en lecture et écriture de ces mémoires permettant la mesure dudit état, c'est à dire de déterminer si la source vidéo est dans un état de lecture directe, de lecture différée, de pause de lecture, d'enregistrement direct, d'enregistrement différé, ou de pause d'enregistrement,
- on produit une image d'information à partir de la mesure,
- on incruste, dans la séquence d'images produite par la source vidéo sélectionnée, l'image d'information.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles pour la mise en oeuvre du procédé selon l'invention ;
- Figure 2 : une illustration d'éléments que comportent une source vidéo ;
- Figures 3a et 3b : une illustration d'états dans lesquels peut se trouver une source vidéo;
- Figure 4 : une illustration d'étapes du procédé selon l'invention.

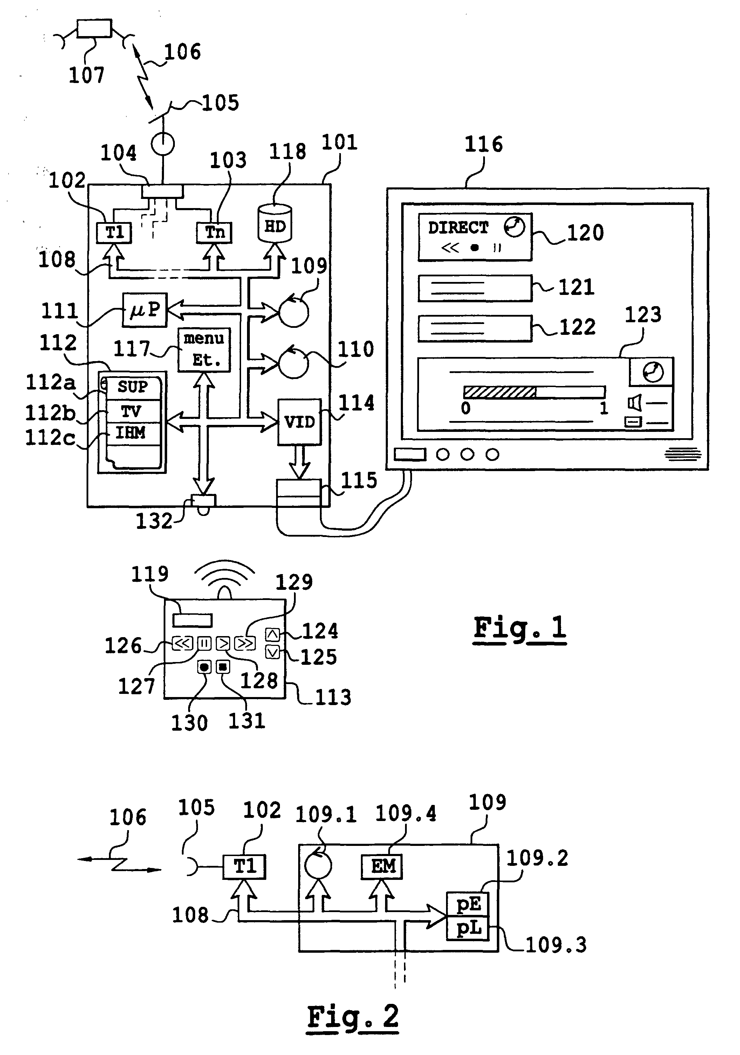

La Figure 1 montre un appareil 101 récepteur décodeur de signaux de télévision. L'appareil 101 comporte un premier tuner 102 et un deuxième tuner 103. Dans l'exemple choisi pour la description, on considère que l'appareil comporte uniquement deux tuners. Dans la pratique, si l'appareil comporte plus de deux tuners, l'enseignement de l'invention reste applicable. L'appareil 101 peut donc avoir n tuners numérotés de T1 à Tn. Pour la description n vaut 2. La figure 1 montre que les tuners 102 et 103 sont connectés à un connecteur 104 lui-même connecté à une antenne 105 parabolique. L'antenne 105 permet d'établir une liaison 106 hertzienne avec un satellite 107. Le satellite 107 est, par exemple, un satellite relais d'un opérateur de télévision. Les tuners 102 et 103 sont donc connectés à la même antenne 105. Dans la pratique, ils pourraient très bien être connectés à deux antennes paraboliques différentes. De même dans la pratique, le connecteur 104 pourrait être connecté à un réseau câblé, une antenne, un réseau xDSL ou tout autre médium permettant de recevoir un signal de télévision numérique ou analogique, plutôt que satellitaire. Les tuners peuvent aussi être connectés à un autre appareil, par exemple, un magnétoscope traditionnel qui produit un signal vidéo qu'un tuner est susceptible de décoder pour produire une séquence d'images.

Dans la description on emploi le terme tuner pour désigner un circuit qui produit des informations numériques, correspondant à une chaîne de télévision sur laquelle est accordé ledit tuner, à partir d'un signal diffusé par un opérateur de télévision et reçu par l'appareil 101. Dans le domaine de la télévision le terme tuner que nous utilisons est aussi appelé front-end.

Les tuners 102 et 103 sont connectés à un bus 108. Un bus est un ensemble de fils et de pistes comportant ces éléments en nombre suffisant pour véhiculer des signaux d'adresses, de données, de commandes, d'interruptions, d'horloges et d'alimentation. Dans un appareil selon l'invention, chaque tuner est associé à une mémoire dite circulaire. Ainsi l'appareil 101 comporte une mémoire 109 associée au tuner 102 et une mémoire 110 associée au tuner 103. Les mémoires 109 et 110 sont connectées au bus 108.

Pour l'appareil 101, un exemple de source vidéo est donc un ensemble comportant le tuner 102 et la mémoire 109, tel qu'illustré par la figure 2.

La figure 2 montre le tuner 102 connecté à l'antenne 105. Le tuner 102 est également connecté, grâce au bus 108, à la mémoire 109. La mémoire 109 comporte une mémoire 109.1 d'enregistrement et de lecture, une mémoire 109.2 qui permet d'enregistrer la valeur d'un pointeur en écriture et une mémoire 109.3 qui permet d'enregistrer la valeur d'un pointeur en lecture. La taille de la zone 109.1 permet par exemple d'enregistrer une trentaine de minutes de vidéo avec son. La mémoire 109 comporte aussi une zone 109.4 dans laquelle on enregistre des informations issues d'un EIT (Event Information Table ou table d'information sur l'événement). Cet EIT comporte entre autre le titre de l'événement, c'est-à-dire de l'émission en cours, sa date et heure de début, ainsi que sa durée. Les EIT sont transmises en même temps que les informations vidéo via la liaison 106. Les EIT sont définies et décrites dans la norme DVB-SI (Digital Video Broadcast Service Information, ou diffusion vidéo numérique d'information sur les services). Dans cette norme un service est l'équivalent d'une chaîne (TF1, FRANCE2, CANAL+,...), et un événement est synonyme d'une émission.

La valeur du pointeur en écriture 109.2 indique l'adresse à laquelle une écriture a lieu dans la mémoire 109.1. Une fois que l'écriture est faite la valeur du pointeur en écriture 109.2 est incrémentée de la taille des données qui ont été écrite dans la mémoire 109.1. Une lecture dans la mémoire 109.1 se fait à l'adresse correspondant à la valeur du pointeur en lecture 109.3. La valeur du pointeur en lecture est modifiée en fonction des actions de l'utilisateur de l'appareil 101. Lorsque l'on dit que la valeur du pointeur en lecture est égale à la valeur du pointeur en écriture, cela signifie que la différence entre ces deux valeurs est inférieure à une unité. L'unité représente l'information de base enregistrée dans la mémoire 109.1, pour le cas présent il s'agit d'une image.

La mémoire 110 a une structure identique à la structure de la mémoire 109. Les informations enregistrées dans les mémoires 109 et 110 sont, par exemple, au format MPEG (Moving Pictures Expert Group, ou groupe d'expert des images animées. Ce groupe publie des normes, dont la norme MPEG, permettant la diffusion numérique d'images animées).

L'appareil 101 comporte un microprocesseur 111 connecté au bus 108. Le microprocesseur 111 exécute des codes instructions enregistrés dans une mémoire 112 elle aussi connectée au bus 108. La mémoire 112 comporte plusieurs zones. Une première zone 112a comporte des codes instructions permettant au microprocesseur d'effectuer une supervision des différentes sources vidéo. Cette supervision consiste par exemple à mesurer un état courant de la source vidéo sélectionnée. La mémoire 112 comporte une deuxième zone 112b comportant des codes instructions permettant au microprocesseur 111 d'effectuer les fonctions pour lesquelles est prévu l'appareil 101, à savoir, recevoir et décoder des signaux de télévision. Enfin la mémoire 112 comporte une troisième zone 112c comportant des codes instructions permettant de réaliser une interface homme machine, et en particulier de produire des images informations qui seront incrustées dans les séquences vidéo produites par les différentes sources vidéo. La mémoire 112 comporte d'autres zones, notamment des zones de stockage de données et des zones de travail qui ne sont pas représentées.

Le tuner 102 reçoit, via l'antenne 105, un signal vidéo comportant plusieurs chaînes ainsi que des tables d'informations (EIT) sur ces chaînes. Le microprocesseur 111, commandé par les codes instructions de la zone 112b, suite à une sollicitation de l'utilisateur de l'appareil 101, paramètre le tuner 102 pour que celui-ci soit accordé sur une chaîne. Cela signifie que le tuner 102 extrait des informations qu'il reçoit via l'antenne 105 les informations correspondant à une chaîne. A partir de ces informations, le tuner 102 produit une séquence d'images. Il produit aussi des informations sur l'émission que diffuse la chaîne sur laquelle il est accordé. Le microprocesseur récupère ces deux types d'informations d'une part les images, d'autre part les informations sur l'émission. Les informations sur l'émission sont enregistrées dans la mémoire 109.4. Les informations vidéo produites sont enregistrées dans la mémoire 109.1. A chaque fois que le tuner 102 produit une image, celle-ci est enregistrée dans la mémoire 109.1 à un emplacement indiqué par le contenu de la mémoire 109.2. Une fois qu'une image a été écrite, le contenu de la mémoire 109.2 est incrémenté de la taille d'une image. La mémoire 109.1 a une capacité limitée, lorsqu'on atteint cette capacité, l'écriture se poursuit au début de la mémoire, cela signifie que les informations, les plus anciennes, qui ont été écrites dans la mémoire 109.1 sont écrasées. Le contenu de la mémoire 109.2 est incrémenté en temps du réel, c'est-à-dire, incrémenté au fur et à mesure que le tuner 102 produit des images.

L'utilisateur de l'appareil 101 peut décider, via une télécommande 113, de sélectionner le tuner 102. Dans ce cas, la séquence d'images produite par le tuner 102 est affichée sur un dispositif connecté à l'appareil 101. Dans ce cas le microprocesseur 111 extrait de la mémoire 109.1 des informations d'images afin de les écrire dans une mémoire 114 connectée au bus 108. L'extraction de ces images se fait grâce à une information de pointeur de lecture enregistrée dans la mémoire 109.3. Le pointeur 109.3 peut pointer dans une zone quelconque de la mémoire 109.1. C'est l'utilisateur qui le déplace en fonction de son parcours temporel de la séquence d'images produite par le tuner 102. La valeur du pointeur 109.3 correspond à un temps différé imposé par l'utilisateur. Si le pointeur 109.3 correspond au pointeur 109.2, alors le temps différé correspond au temps réel. Cependant, si t'utilisateur décide d'effectuer une pause dans sa visualisation de la séquence d'images produite par le tuner 102, alors le pointeur 109.2 va continuer à s'incrémenter au rythme auquel le tuner 102 produit les images alors que le pointeur 109.3 ne s'incrémentera plus. Le pointeur 109.3 reprendra son incrémentation ou se décrémentera en fonction de la volonté de l'utilisateur de l'appareil 101.

La figure 1 montre que la mémoire 114 est connectée à un connecteur 115. Ce connecteur 115 est par exemple du type péritel, ce qui permet de connecter un dispositif 116 de télévision à l'appareil 101. Le connecteur 115 lit, à une fréquence donnée, le contenu de la mémoire 114 et produit un signal analogique compatible avec le type d'appareil qui est connecté à l'appareil 101. La mémoire 114 est une mémoire dite vidéo.

L'appareil 101 comporte aussi une diode 132 réceptrice qui permet de recevoir des ordres produits par la télécommande 113. La diode 132 est connectée à cet effet au bus 108.

L'appareil 101 comporte aussi une mémoire 117 d'état. Lorsque le microprocesseur 111, commandé par les codes instructions de la zone 112a, effectue des mesures sur l'état des sources vidéo, il enregistre ces états résultats des mesures dans cette mémoire. Ces informations sont ensuite accessibles pour produire des images informations.

L'appareil 101 comporte aussi un disque dur 118 connecté au bus 108. Les mémoires 109 et 110 peuvent être des zones de ce disque dur 118, ou d'un autre moyen de stockage non représenté. Le disque dur 118 permet d'enregistrer des fichiers vidéo par exemple au format MPEG. Le disque dur 118 peut être considéré une source vidéo. Cette source vidéo se comporte alors comme si le disque dur était dans un ordinateur et sur lequel on aurait enregistré des fichiers MPEG. Ces fichiers sont alors visualisables et on peut les parcourir en avant ou en arrière ainsi qu'effectuer des pauses au cours de la lecture. Il est donc possible de sélectionner le disque 118 comme source vidéo. Dans ce cas le microprocesseur 111 extrait, d'un fichier du disque 118, une séquence d'images. Les images de cette séquence extraite sont ensuite écrites dans la mémoire 114 et donc visualisées sur le dispositif 116.

La figure 1 montre que la télécommande 113 comporte un certain nombre de touches. Une touche 119 permet de provoquer l'affichage d'images informations aussi appelées OSD (On Screen Display, affichage sur l'écran). Lorsque l'utilisateur appuie sur cette touche, il envoie un ordre à l'appareil 101. Cet ordre est reçu, par exemple, via la diode 132. Le microprocesseur exécute alors des codes instructions de la zone 112a afin d'effectuer une mesure des états courants des sources vidéo. Les résultats de cette mesure sont stockés dans la mémoire 117. Le microprocesseur 111, commandé par les codes instructions de la zone 112c, produit des images informations qui seront incrustées dans la séquence d'images produite par la source vidéo sélectionnée. Le microprocesseur 111 modifie le contenu de la mémoire 114 pour y introduire des images informations. Ces images informations sont affichées sur l'écran 116 en même temps que la séquence d'images produite par la source vidéo sélectionnée. Il y a une image d'information 120 correspondant au tuner 102, une image d'information 121 correspondant au tuner 103, et une image d'information 122 correspondant au disque dur 118. Les images 120 à 122 décrivent les résultats de la mesure ainsi que les actions qu'il est possible d'effectuer sur les sources vidéo. Il y a aussi une image 123 d'information qui présente des informations plus poussées sur l'émission correspondant à la source vidéo sélectionnée. Ces informations sont par exemple le titre de l'émission et sa durée.

Il existe plusieurs type d'images informations. Dans une variante l'utilisateur de l'appareil 101 appuie plus ou moins longtemps sur la touche 119 selon le type d'images informations qu'il veut afficher. Un appui simple provoque l'affichage d'image d'un premier type. Si l'utilisateur maintient son appui cela provoque l'affichage d'images informations du deuxième type. Un appui, encore plus prolongé provoque l'affichage simultané de deux types d'images informations. Un nouvel appui efface les images informations des deux types. Dans une variante, on utilise un système de simple, double et triple appui comparable au système des clics de souris existant pour les ordinateurs personnels.

La télécommande 113 comporte aussi des touches 124 et 125 permettant de sélectionner la source vidéo active. Une touche 126 ( 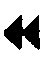 ) permet de remonter la séquence vidéo de la source vidéo sélectionnée. Une touche 127 ( 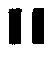 ) permet d'effectuer une pause dans l'affichage des images de la séquence d'images produite par la source vidéo sélectionnée. Une touche 128 ( 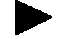 ) permet de parcourir à vitesse normale c'est-à-dire 25 images par seconde la séquence d'images produite par la source vidéo sélectionnée. Une touche 129 ( 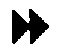 ) permet de parcourir en vitesse accélérée la séquence d'images produite par la source vidéo sélectionnée. Une touche 130 (•) permet de provoquer l'enregistrement de la séquence d'images produite par la source vidéo sélectionnée. Une touche 131 (■) permet de revenir en temps réel pour la visualisation de la séquence d'images produite par la source vidéo sélectionnée.

Les fonctions décrites pour les touches 126 à 131 dépendent en fait de la source vidéo sélectionnée, ainsi que de l'état dans lequel se trouve la source vidéo sélectionnée. C'est est aussi vrai pour les images informations 120 à 122. En effet leur contenu dépend de la source vidéo sélectionnée, ainsi que de l'état de cette source.

Lorsque l'utilisateur sélectionne une source vidéo, cela signifie que la séquence d'images que cette source produit est utilisée pour écrire des images dans la mémoire 114. En d'autres termes, cela signifie que la séquence d'images produite par la source sélectionnée est celle qui est visualisée sur l'écran 116. La table I suivante indique des combinaisons d'états possibles pour les différentes sources que comporte l'appareil 101.

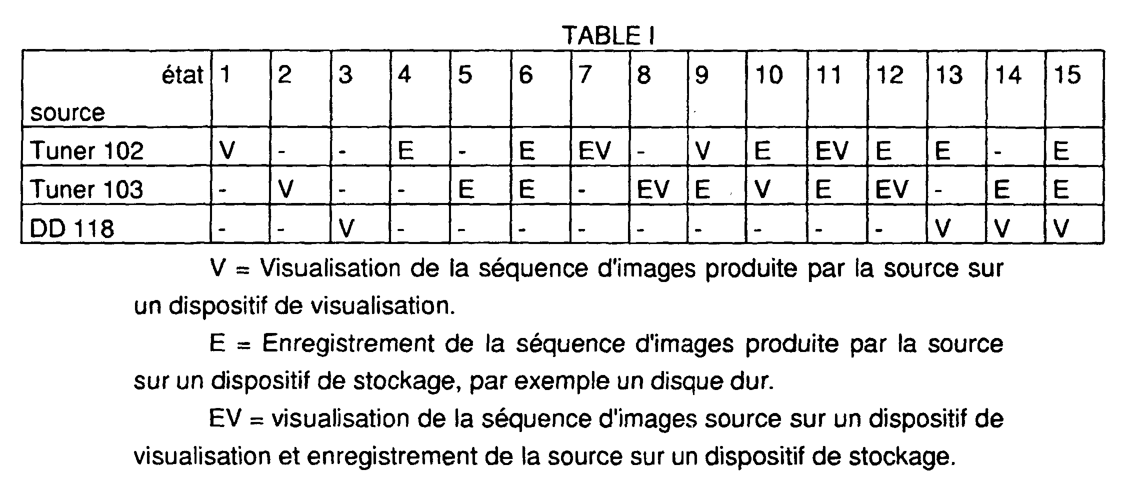

Ainsi un appareil comportant deux tuners et un disque dur, soit trois sources vidéo, peut se trouver dans au moins quinze états en fonction de l'utilisation que fait un utilisateur de l'appareil.

Ainsi si on considère l'état 15 décrit par la table I cela signifie que la source sélectionnée est le disque dur 118, il y a en effet un V sur la ligne correspondant au disque dur, mais qu'en plus les tuners 102 et 103 produisent des séquences d'images qui sont enregistrées sur le disque dur 118. En fait cela est encore plus complexe puisqu'une visualisation peut se faire en temps réel, en temps différé ou être suspendu.

Les combinaisons possibles se complexifient encore avec les possibilités d'affichage simultané aussi connu sous la dénomination de PIP (Picture In Picture, ou image dans l'image), et les possibilités d'une mosaïque d'images, chaque image de la mosaïque correspondant à une source vidéo et étant affichée dans une fenêtre de l'écran. Ici une fenêtre correspond à une zone de l'écran.

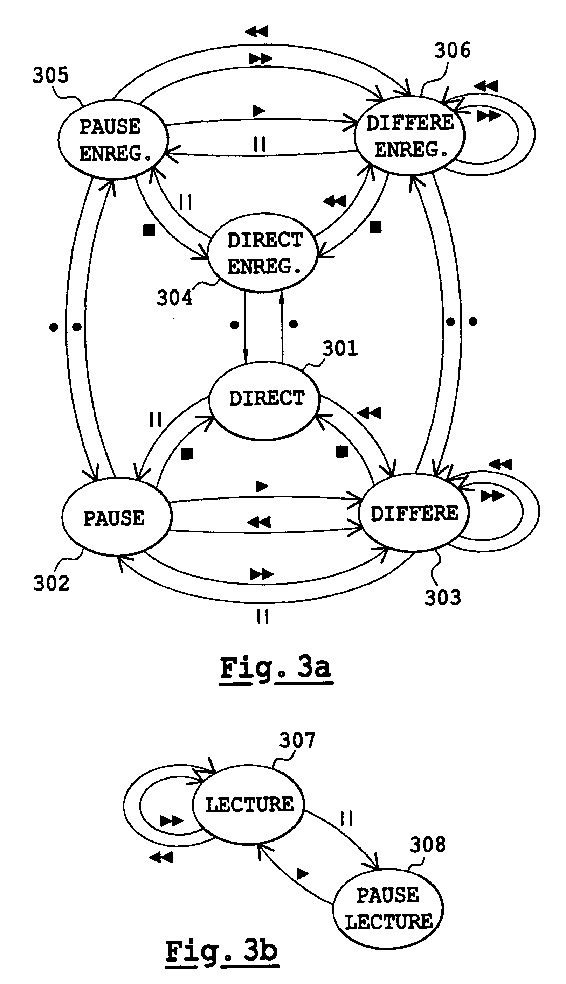

La figure 3a décrit les états dans lesquels peut se trouver une source vidéo comportant un tuner. La figure 3a montre un état 301 correspondant à un état direct. Dans cet état, le pointeur de lecture, c'est à dire la valeur correspondant à cette source, coïncide avec le pointeur d'écriture, c'est à dire sa valeur. En d'autres termes, cela signifie que l'utilisateur visualise les images produites par cette source vidéo au fur et à mesure qu'elles sont produites par la source vidéo. D'un état 301 on peut passer à un état 302 de pause.

Dans l'état 302, l'utilisateur a souhaité effectuer une pause dans le parcours de la séquence d'images produite par la source vidéo. Cela signifie que le pointeur de lecture est figé, alors que le pointeur en écriture continue à être incrémenté au rythme auquel la source vidéo produit la séquence d'images. Dans l'état 302, l'image affichée sur le dispositif 116 est figée.

Une source vidéo du type tuner peut aussi être dans un état 303 dit différé. Dans cet état, l'utilisateur effectue un parcours de la séquence d'images produite par la source, mais le pointeur de lecture ne correspond pas au pointeur d'écriture. Les images affichées à un instant t sur le dispositif 116, lorsque la source vidéo sélectionnée est dans un état différé, ne correspondent pas aux images produites à l'instant t. Les images affichées sont extraites d'une mémoire du type 109.1 à l'aide de la valeur du pointeur en lecture qui est alors différente de la valeur du pointeur en écriture.

Un état 304 correspond à un enregistrement direct. Dans cet état, l'utilisateur enregistre la séquence d'images produite par la source vidéo et visualise cette séquence d'images au même rythme que celui auquel cette séquence d'images est produite.

Dans un état 305, l'utilisateur enregistre la séquence d'images produite par la source vidéo, mais effectue une pause dans la visualisation. Le pointeur de lecture correspondant à la visualisation n'est donc plus incrémenté.

Un état 306 correspond à un enregistrement en différé. La séquence d'images produite par la source vidéo est alors enregistrée et visualisé en temps différé. Dans cet état le pointeur de lecture ne correspond pas au pointeur d'écriture.

En fait, les étapes 304 à 306 sont identiques respectivement aux étapes 301 à 303 si ce n'est qu'en plus la séquence d'images produite par la source vidéo est enregistrée.

Pour la description, on considère qu'un enregistrement est fait à partir de la lecture contenue de la mémoire, du type 109.1, à enregistrer à l'aide du pointeur de lecture. Dans la pratique, on peut utiliser un autre pointeur en lecture spécifique pour l'enregistrement.

La figure 3a illustre aussi le fait qu'il est possible de passer d'un état à un autre état. Ces passages s'effectuent par des appuis sur des touches de la télécommande 113. Ainsi, de l'état 301 on passe à l'état 302 en appuyant sur la touche 127, de l'état 301 à l'état 303 en appuyant sur la touche 126, de l'état 301 à l'état 304 en appuyant sur la touche 130.

On passe de l'état 302 à l'état 303 en appuyant soit sur la touche 128, soit sur la touche 126, soit sur la touche 129. On passe de l'état 302 à l'état 301 en appuyant sur la touche 131. On passe de l'état 302 à l'état 305 en appuyant sur la touche 130.

On passe de l'état 303 à l'état 301 en appuyant sur la touche 131. On passe de l'état 303 à l'état 302 en appuyant sur la touche 127. On passe de l'état 303 à l'état 306 en appuyant sur la touche 130. Les touches 126 et 127 permettent de parcourir la séquence d'images mais maintiennent la source vidéo dans l'état 303.

On passe de l'état 304 à l'état 301 en appuyant sur la touche 130. On passe de l'état 304 à l'état 305 en appuyant sur la touche 127. On passe de l'état 304 à l'état 306 en appuyant sur la touche 126.

On passe de l'état 305 à l'état 302 en appuyant sur la touche 130. On passe de l'état 305 à l'état 304 en appuyant sur la touche 131. On passe de l'état 305 à l'état 306 en appuyant soit sur la touche 128, soit sur la touche 126, soit la touche 129.

On passe de l'état 306 à l'état 303 en appuyant sur la touche 130. On passe de l'état 306 à l'état 304 en appuyant sur la touche 131. On passe de l'état 306 à l'état 305 en appuyant sur la touche 127. Les touches 126 et 127 permettent de parcourir la séquence d'images mais maintiennent la source vidéo dans l'état 306.

La figure 3b illustre des états possibles pour la source vidéo correspondant au disque dur 118. La figure 3b montre un état 307 de lecture. Dans cet état, l'utilisateur visualise sur l'écran 116 une séquence d'images qui est lue à partir du disque dur 118. L'utilisateur peut utiliser les touches 126 et 129 afin d'accélérer la lecture ou de revenir en arrière. S'il utilise la touche 127, l'utilisateur provoque le passage de la source dans un état pause/lecture 308. Dans cet état, l'image sur l'écran 116 est figée et les images ne sont plus lues sur le disque dur. L'utilisateur lorsqu'il est dans l'état 308 peut appuyer sur la touche 128 afin de revenir à l'état 307 de lecture.

Les touches 126 à 129 permettent d'effectuer un parcours de la séquence d'images produite par la source vidéo sélectionnée. Lorsque l'utilisateur appuie sur la touche 126, le pointeur de lecture associé à la source vidéo est décrémenté. Cela revient à faire une lecture arrière sur un magnétoscope standard. Lorsqu'il appuie sur la touche 127, l'utilisateur provoque une pause dans le défilement de la séquence d'images produite par la source vidéo sélectionnée. Cela revient à faire une pause sur un magnétoscope standard. Lorsque l'utilisateur appuie sur la touche 128, il reprend une vitesse de parcours, donc de visualisation normale de la séquence d'images produite par la source vidéo sélectionnée. La touche 129 permet une lecture en avant accélérée. Dans le cas d'une source vidéo comportant un tuner, la lecture accélérée ne permettra jamais de dépasser le pointeur d'écriture. En effet, il n'est pas possible de visualiser une image qui n'a pas encore été reçue par l'appareil 101. De même dans le cas d'une source vidéo comportant un tuner, il est impossible de revenir en arrière indéfiniment puisque la taille de la mémoire n'est pas indéfinie.

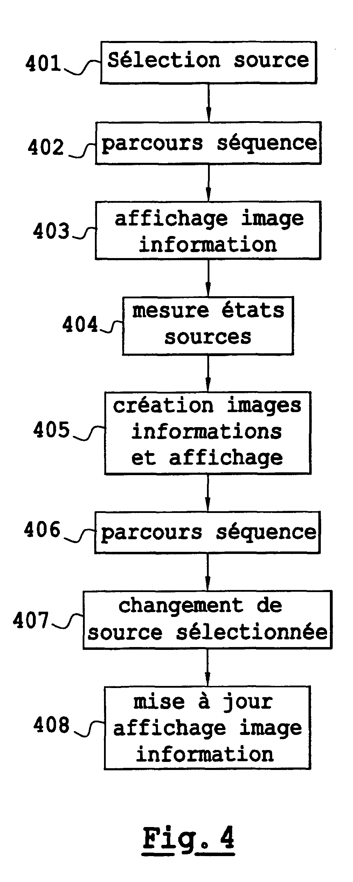

La figure 4 montre une première étape 401 de sélection de la source. Dans l'étape 401, un utilisateur de l'appareil 101 utilise les boutons 124 et 125 de la télécommande 113 pour sélectionner une source vidéo. Les sources vidéo possibles pour l'appareil 101 sont les sources comportant les tuners 102 et 103, ainsi que la source vidéo comportant le disque dur 118. Dans notre exemple, on considère que l'utilisateur sélectionne la source vidéo comportant le tuner 102. Une fois la source vidéo sélectionnée, l'utilisateur peut alors choisir le canal, ou chaîne de télévision, sur lequel il accorde cette source. Cette opération est réalisable dans le cas d'un tuner par exemple. Il n'est en effet pas possible d'accorder un disque dur sur une chaîne de télévision. Par contre, on peut sélectionner quel fichier est lu sur un disque dur. On passe à une étape 402 de parcours de la séquence d'images produite par la source sélectionnée.

Dans l'étape 402, l'utilisateur utilise les touches 126 à 131 pour parcourir la séquence d'images produite par la source vidéo sélectionnée. Au moment où il a sélectionné la source comportant le tuner 102, on considère que celle-ci était dans un état 301 direct. L'utilisateur peut donc utiliser l'une quelconque des touches de la télécommande pour passer dans l'un des états 302 à 306 décrits pour la figure 3a. Les états 303 et 306 sont accessibles dès que la mémoire 109, ou 110, est suffisamment remplie. Au cours de l'étape 402, l'utilisateur peut décider de s'informer sur l'état des différentes sources vidéo que comporte l'appareil 101. On passe alors à une étape 403.

Pour entrer dans l'étape 403 l'utilisateur enfonce la touche 119. Cet appui/enfoncement, comme pour l'enfoncement des autres touches provoque l'émission d'ondes radio ou infrarouges qui sont reçues par la diode 132. Ces ondes sont alors transformées en signaux numériques qui sont lus et interprétés par le microprocesseur 111. Dans le cas de la touche 119, il s'agit d'une requête pour connaître l'état des sources vidéo que comporte l'appareil 101. Le microprocesseur 111 est alors commandé par les codes instructions de la zone 112a. Le microprocesseur 111 interroge, via le bus 108, chacune des sources vidéo, la première comportant le tuner 102, la deuxième comportant le tuner 103 et la troisième comportant le disque dur 118. En particulier le microprocesseur 111 détermine dans quel état se trouve chacune de ces sources vidéo. Ces états sont ceux qui ont été décrits dans les figures 3a et 3b. Ces mesures sont effectuées dans une étape 404.

Par exemple, pour la source vidéo comportant le tuner 102, la détermination de son état se fait par une analyse du contenu de la mémoire 109. Le contenu de la mémoire 109.2 et 109.3 permet de déterminer si la source est en direct, en différé ou en pause. En effet, si le pointeur en écriture coïncide avec le pointeur en lecture, cela signifie que l'on est en direct, s'il y a une différence cela signifie que l'on est en différé, et si en plus le pointeur en lecture ne s'incrémente pas cela signifie que l'on est en pause.

La différence de valeur entre les pointeurs en écriture et en lecture permet de déterminer la durée du décalage temporel existant entre le mode différé et le mode réel. En effet la différence de valeur entre le pointeur en écriture et le pointeur en lecture correspond à un nombre d'images. En règle générale, une seconde correspond à 25 images, ce nombre étant lié à des particularités de la vision humaine. Il est donc assez facile de réaliser une conversion entre la différence entre les valeurs du pointeur en écriture et du pointeur en lecture et une durée. Ce mode de détermination est utilisable si l'on admet que les images enregistrées dans les mémoires 109 ou 110 sont de taille fixe. Cela n'est pas le cas en MPEG. Cependant la norme MPEG prévoit des balisages utilisables pour dater les images, l'utilisation de ce balisage permet donc de déterminer la différence de temps existant entre le pointeur en lecture et le pointeur en écriture.

Le contenu de la mémoire 109.4 permet de connaître, par exemple le titre et la durée de l'événement en cours sur la source vidéo.

L'ensemble des informations collectées dans l'étape 404 est alors enregistré dans la mémoire 117. Ces informations sont collectées pour chacune des sources vidéo.

On passe à une étape 405 de création des images informations et à leur affichage. Dans l'étape 405, le microprocesseur 111 est commandé par des codes instructions de la zone 112c. Dans l'étape 405, le microprocesseur produit des images informations de deux types.

Un premier type d'image d'information correspond à la source vidéo sélectionnée. Cette image d'information comporte le titre de l'événement, l'heure courante, ainsi que les différents paramètres caractérisant l'événement. Parmi ces paramètres, on peut citer par exemple si les sous-titres sont utilisés ou pas, quelle langue est utilisée pour les sous-titres, quelle langue audio est sélectionnée, le numéro et le nom de la chaîne sur laquelle est accordée la source vidéo sélectionnée. Cette première image d'information comporte aussi une indication de la durée totale de l'événement ainsi que de la durée déjà écoulée. Cette indication se présente sous la forme d'un graphe en barre.

Un graphe en barre est un élément graphique rectangulaire très allongé. La longueur totale du graphe en barre représente la totalité de la durée de l'événement. Au fur et à mesure que l'événement se déroule, le graphe en barre se remplit, de la gauche vers la droite, par une couleur. La longueur remplie correspond à la durée déjà écoulée de l'événement. Dans l'invention la durée remplie correspond à l'état de la source. C'est-à-dire si la source est dans un état direct la partie remplie correspond à l'état du pointeur en écriture, si la source est dans un état différé, ou pause, la partie remplie correspond à l'état du pointeur en lecture.

Le deuxième type d'image information correspond à des images information de commandes. Il y a autant d'images informations du deuxième type que de sources vidéo dans l'appareil 101. Une image information du deuxième type comporte une indication sur l'état de la source vidéo, ainsi que des indications sur les actions possibles sur cette source vidéo. Par exemple l'image information 120 correspond à la source vidéo comportant le tuner 102. Cette image information comporte alors une information indiquant que cette source est dans un mode direct, par exemple le terme "LIVE". L'image information 120 comporte aussi des imagettes représentant chacune des touches de la télécommande 113 qu'il est possible d'utiliser en fonction l'état de la source comportant le tuner 102. Ces touches, si la source est dans un état 301, sont les touches 126, 130 et 127. Ces touches permettent de passer dans un état différé ou pause. La touche 130 permet aussi de provoquer un enregistrement. Les touches possibles pour les imagettes ont été décrites lors de la description des figures 3a et 3b.

Si la source comportant le tuner 102 est dans un état différé, on indique un décalage par rapport au temps réel. Par exemple, si l'utilisateur visionne la séquence d'images produite par la source vidéo comportant le tuner 102 en différé de dix minutes, cette information apparaît sous la forme "0h10min0s"

Une imagette d'information du deuxième type est ainsi produite pour chacune des sources vidéo que comporte l'appareil 101.

Dans notre exemple, l'appareil 101 comporte trois sources vidéo. Ainsi, lorsque l'utilisateur appuie sur la touche 119, il provoque l'affichage de quatre images informations, trois du deuxième type correspondant aux sources vidéo et à leur état, et une du premier type correspondant plus spécifiquement à la source vidéo sélectionnée.

Les images informations du deuxième type ne sont pas toutes affichées de la même manière. En effet, l'image d'information correspondant à la source vidéo sélectionnée est mise en évidence par rapport aux deux autres. Par exemple, ce sont les deux autres qui sont affichées sous forme semi-transparentes. Ainsi à travers ces images informations affichées sous forme semi-transparente l'utilisateur peut encore voir le fond de l'écran qui correspond à la séquence d'images produite par la source vidéo sélectionnée.

Une fois produites par le microprocesseur 111, les images informations sont écrites dans la mémoire 114 vidéo. Ces images correspondent à des fenêtres dans l'image totale. Une image totale est une image appartenant à une séquence vidéo produite par une source vidéo. Une telle image a donc certaines dimensions. Les images informations ont des dimensions bien inférieures. Par exemple si une image d'une séquence produite par une source vidéo a une dimension de 800 pixels de largeur sur 600 pixels de hauteur, une image d'information du premier type aura, par exemple, 600 pixels de largeur sur 100 pixels de hauteur. Cette image du premier type sera alors affichée en bas de l'écran de manière centrée. Une image du deuxième type aura alors une dimension de 120 pixels de largeur sur 70 pixels de hauteur. Ces images seront par exemple affichées l'une au-dessus de l'autre à gauche de l'écran. Une telle disposition permet à l'utilisateur de visualiser les images informations tout en pouvant continuer à regarder la séquence d'images produite par la source vidéo sélectionnée.

On passe à une étape 406 de parcours de la séquence. Cette étape est identique à l'étape 402 si ce n'est qu'en plus les images informations sont présentes à l'écran. Le microprocesseur 111 écrit dans la mémoire 114 les images produites par la source vidéo sélectionnée, sur lesquelles il incruste les images informations.

Dans une étape suivante 407 l'utilisateur change de source vidéo sélectionnée. Dans ce cas les images informations sont mises à jour. Pour l'image d'information du premier type l'ensemble des informations qu'elle comporte change. En effet le titre, la durée de l'événement et les autres informations correspondent à la chaîne sur laquelle la nouvelle source vidéo sélectionnée est accordée. Pour les images informations du deuxième type le contenu ne change pas mais comme il s'agit d'une nouvelle source vidéo sélectionnée, ce n'est plus la même qui est mise en évidence par rapport aux autres. Cette mise à jour des images informations se produit dans l'étape 408.

Lorsque les images informations du deuxième type sont affichées et que l'utilisateur de l'appareil 101 modifie, via la télécommande 113, l'état de la source vidéo sélectionnée, l'affichage des images informations correspondantes est mis à jour. En effet l'action de l'utilisateur peut modifier la différence existant entre les valeurs des pointeurs en lecture et en écriture. L'action de l'utilisateur peut aussi modifier l'état proprement dit. Dans ce cas les boutons, de la télécommande 113, utilisables sont modifiés et le contenu de l'image information correspondante est mis à jour en fonction de cette modification.

Dans une autre variante de l'invention l'appareil 101 et le dispositif 116 sont un seul et même appareil.

Dans une variante de l'inventions les imagettes du deuxième type comporte d'autres informations comme par exemple la chaîne sur laquelle est accordée la source vidéo correspondant à l'imagette.

Dans une autre variante de l'invention, l'affichage des imagettes du deuxième type est la conséquence non pas de l'appui sur la touche 119, mais sur une touche spécifique de la télécommande.

Dans une variante de l'invention, lorsque l'affichage est du type PIP ou mosaïque, une fenêtre est mise en évidence par un liseré d'une couleur donnée. Cette image correspond, par exemple, à la source vidéo sélectionnée. Dans ce cas l'imagette du deuxième type mise en évidence correspond toujours à la source vidéo sélectionnée. Dans ce cas toujours la source vidéo sélectionnée correspond à la source dont les images sont affichées dans la fenêtre comportant le liseré.

## Revendications

1. Procédé de commande de premiers moyens (101), de production de signal vidéo, comportant plusieurs sources (102, 103, 118) vidéo produisant des séquences d'images simultanément, cette production de séquences d'images s'effectue en temps réel à un rythme imposé par au moins des deuxièmes moyens (107) d'émission produisant des signaux à partir desquels des sources vidéo produisent des séquences d'images, procédé dans lequel :
- on sélectionne (401) une source vidéo pour que la séquence d'images qu'elle produit soient affichées sur un dispositif de visualisation connecté aux premiers moyens,
- on parcourt (402) temporellement la séquence d'images produite par la source vidéo sélectionnée,
**caractérisé en ce que** :
- on mesure (404) un état dit courant de la source vidéo sélectionnée, chacune des sources vidéo comportant une mémoire tournante, des valeurs de pointeurs en lecture et écriture de ces mémoires permettant la mesure dudit état, c'est à dire de déterminer si la source vidéo est dans un état de lecture directe de lecture différée, de pause de lecture, d'enregistrement direct, d'enregistrement différé, ou de pause d'enregistrement,
- on produit (405) une image information à partir de la mesure,
- on incruste (405), dans la séquence d'images produite par la source vidéo sélectionnée, l'image information.

2. Procédé selon la revendication 1 **caractérisé en ce que**
- on mesure l'état courant pour chacune des sources vidéo,
- on produit des images d'informations à partir des mesures, et
- on incruste, dans la séquence d'images produites par la source vidéo sélectionnée, les images informations.

3. Procédé selon l'une des revendications 2, **caractérisé en ce que** lors de l'incrustation on met l'image d'information correspondant à la source vidéo sélectionnée en évidence par rapport à une source vidéo non sélectionnée.

4. Procédé selon l'une des revendications 1 à 3, **caractérisé en ce qu'**on insère dans une image information des images définissant respectivement des boutons correspondant à des commandes que l'utilisateur des premiers moyens peut envoyer à la source vidéo correspondant à l'image d'information.

5. Procédé selon la revendication 4, **caractérisé en ce que** chaque image bouton correspond à une touche sur un dispositif de commande, de préférence une télécommande, des premiers moyens.

6. Procédé selon l'une des revendications 1 à 5, **caractérisé en ce qu'**on provoque l'incrustation d'au moins une image d'information par un appuie sur une touche d'un dispositif de commande, de préférence une télécommande, des premiers moyens.

7. Procédé selon l'une des revendications 1 à 6, **caractérisé en ce que**:
- on modifie la source vidéo sélectionnée,
- on adapte l'affichage des images informations en tenant compte du fait que la source sélectionnée a été modifiée.

8. Procédé selon l'une des revendications 1 à 7, **caractérisé en ce que** les premiers moyens sont intégrés dans un appareil récepteur de signaux de télévision.

## Patentansprüche

1. Verfahren zum Steuern erster Mittel (101), zum Erzeugen von Videosignalen, das mehrere Videoquellen (102, 103, 118) umfasst, die gleichzeitig Bildsequenzen erzeugen, wobei dieses Erzeugen von Bildsequenzen in Echtzeit in einem Takt erfolgt, der von mindestens zweiten Mitteln zum Senden (107) vorgegeben wird, die Signale erzeugen, auf deren Grundlage Videoquellen Bildsequenzen erzeugen, wobei in dem Verfahren:
- eine Videoquelle ausgewählt wird (401), damit die Bildsequenz, die sie erzeugt, auf einer Visualisierungs-Vorrichtung angezeigt wird, die mit den ersten Mitteln verbunden ist,
- die Bildsequenz, die von der gewählten Videoquelle erzeugt wird, zeitweise durchlaufen wird (402),
**dadurch gekennzeichnet, dass**:
- ein als aktuell bezeichneter Status der gewählten Videoquelle gemessen wird (404), wobei jede der Videoquellen einen Umlaufspeicher besitzt, wobei Zeiger-Werte dieser Speicher bei Read- und Write-Vorgängen die Messung des besagten Status, d.h. die Feststellung erlauben, ob sich die Videoquelle in einem Status der Live-Wiedergabe, der zeitversetzten Wiedergabe, der Wiedergabepause, der Live-Aufnahme, der zeitversetzten Aufnahme, oder der Aufnahmepause befindet,
- auf Grundlage der Messung ein Informationsbild erzeugt wird (405),
- das Informationsbild in die von der gewählten Videoquelle erzeugte Bildsequenz eingefügt wird (405).

2. Verfahren nach Anspruch 1, **dadurch gekennzeichnet, dass**
- der aktuelle Status für jede der Videoquellen gemessen wird,
- Informationsbilder auf Grundlage der Messungen erzeugt werden, und
- die Informationsbilder in die von der gewählten Videoquelle erzeugte Bildsequenz eingefügt werden.

3. Verfahren nach Anspruch 2, **dadurch gekennzeichnet, dass** während des Einfügens das Informationsbild, das der gewählten Videoquelle entspricht, in Bezug auf eine nicht gewählte Videoquelle hervorgehoben wird.

4. Verfahren nach einem der Ansprüche 1 bis 3, **dadurch gekennzeichnet, dass** in ein Informationsbild Bilder eingegliedert werden, die jeweils Bedienungsknöpfe definieren, die Befehlen entsprechen, die der Benutzer der ersten Mittel an diejenige Videoquelle senden kann, die dem Informationsbild entspricht.

5. Verfahren nach Anspruch 4, **dadurch gekennzeichnet, dass** jedes Bedienungsknopf-Bild einer Taste auf einer Vorrichtung zur Steuerung, vorzugsweise einer Fernsteuerung, der ersten Mittel entspricht.

6. Verfahren nach einem der Ansprüche 1 bis 5, **dadurch gekennzeichnet, dass** das Einfügen von mindestens einem Informationsbild durch ein Drücken einer Taste einer Vorrichtung zum Steuern, vorzugsweise einer Fernbedienung, der ersten Mittel hervorgerufen wird.

7. Verfahren nach einem der Ansprüche 1 bis 6, **dadurch gekennzeichnet, dass**:
- die gewählte Videoquelle modifiziert wird,
- die Anzeige der Informationsbilder unter Berücksichtigung der Tatsache adaptiert wird, dass die gewählte Quelle modifiziert wurde.

8. Verfahren nach einem der Ansprüche 1 bis 7, **dadurch gekennzeichnet, dass** die ersten Mittel in ein Empfangsgerät für Fernsehsignale integriert sind.

## Claims

1. Method for controlling first means (101) for production of video signals comprising a plurality of video sources (102, 103, 118) producing sequences of images simultaneously, this production of sequences of images being effected in real time at a rhythm set by at least second means (107) for broadcasting producing signals from which video sources produce sequences of images, in which method:
- a video source is selected (401) so that the sequence of images which it produces is displayed on a display device connected to the first means,
- the sequence of images produced by the selected video source is run through (402) in time order,
***characterised in that***:
- a so-called current state of the selected video source is measured (404), each of the video sources comprising a circular memory, with values of read and write pointers for these memories making it possible to measure said state, i.e. to determine if the video source is in a direct reading, delayed reading, reading pause, direct recording, delayed recording or recording pause state,
- an information image is produced (405) from the measurement,
- the information image is overlaid (405) in the sequence of images produced by the selected video source.

2. Method according to claim 1, ***characterised in that***
- the current state is measured for each of the video sources,
- information images are produced from the measurements and
- the information images are overlaid in the sequence of images produced by the selected video source.

3. Method according to one of claims 2, ***characterised in that*** when it is overlaid, the information image corresponding to the selected video source is shown in relation to an unselected video source.

4. Method according to one of claims 1 to 3, ***characterised in that*** images are inserted in an information image which respectively define buttons corresponding to commands which the user of the first means can send to the video source corresponding to the information image.

5. Method according to claim 4, ***characterised in that*** each button image corresponds to a button on a control device, preferably a remote control, of the first means.

6. Method according to one of claims 1 to 5, ***characterised in that*** the overlaying of at least one information image is caused by pressing a button of a control device, preferably a remote control, of the first means.

7. Method according to one of claims 1 to 6, ***characterised in that***
- the selected video source is changed,
- the display of the information images is adapted taking account of the fact that the selected source has been changed.

8. Method according to one of claims 1 to 7, ***characterised in that*** the first means are incorporated in an apparatus for receiving television signals.
